# EUROPEAN PATENT APPLICATION

(11) **EP 3 324 099 A1**
(43) Date of publication of application: **23.05.2018**
(21) Application number: 16199174.0
(22) Date of filing: 16.11.2016
(51) Int. Cl.: F21S 2/00, F21V 29/58, F21V 21/088, F21V 21/08, A01G 7/04, A01G 31/06, F21Y 115/10

(54) **COOLED MODULAR LIGHTING ARRANGEMENT**

(71) Applicant: Heliospectra AB (publ), 402 29 Göteborg (SE)
(72) Inventor: Hillberg, Staffan, 431 36 Mölndal (SE); Jönsson, Ulf, 43277 Tvååker (SE)
(74) Representative: Awapatent AB

(57) **Abstract**

A cooled modular lighting (1) arrangement and an illuminated cultivation storage system are disclosed. The cooled modular lighting arrangement comprises a coolant channel system (2) including at least one tubular channel section (3), and at least one lighting unit (4) requiring cooling which is attachable, detachable, and re-attachable from the tubular section. Each of the one or more lighting units comprises an elongated groove (6) formed to receive said tubular section when the lighting unit is attached to the tubular section, so that, when the lighting unit is attached to the tubular section, the tubular section provides cooling of the lighting unit without requiring any fluid connection of the lighting unit to the channel system

## Description

### TECHNICAL FIELD OF THE INVENTION

The present invention relates to an arrangement for controlling the temperature of lighting units, and in particular to a modular cooling arrangement for lighting units in a greenhouse environment.

### BACKGROUND OF THE INVENTION

It is not entirely unexpected that there is a rapidly increasing demand for seasonal vegetables (as well as herbs, fruits, etc.) all year round, particularly in the developed part of the world. In many cases the local climate will not allow that kind of growth, which is why greenhouse farming is becoming (has become) a significant factor in the food industry of the developed world. However, this kind of farming has a negative impact on the environment due to high energy consumptions in commercial greenhouses which have to be lit (and sometimes heated) in a way that optimizes growth in order to increase yield.

As a remedy to this, greenhouses are nowadays often converting to LEDs (light emitting diodes) from traditional incandescent lighting (e.g. high pressure sodium, HPS) in order to increase energy efficiency. Moreover, LEDs are not only more energy efficient (approx. 50% of input power is converted to useable light, as compared to 25-30% in more conventional lighting arrangements) but they also allow for improved control of plant growth due to their ability to emit light in very specific parts of the visible light spectrum.

However, semiconductor based devices, such as LEDs, also generate a notable amount of heat during operation, and overheating the LEDs can degrade performance over time which increases the need for maintenance and reduces the life expectancy of the lighting units which leads to increased costs. Thus, it therefore desired to employ some cooling arrangement in order to cool the LEDs during operation. Perhaps even more so in vertical farming (also known as m³ farming) systems which present major challenges in terms of high power density and temperature or thermal management. In short, vertical farming is based on the concept that a floor area or hall is provided with a storage system having a framework structure (e.g. racks), so as to increase the effective surface for growing plants. The plants are then grown in pots placed in containers (such as e.g. crates or trays) situated in this three-dimensional framework structure, the containers being stacked above and/or besides each other forming vertical and/or horizontal storehouse caches. An example of a 3D storage system can be found in WO 2015/019055.

To this end, there have been some attempts to resolve some of the issues related to overheating of the LEDs, generally involving some type of cooling arrangement. For example, US Patent No. 9,360,200 discloses a cooling device for cylindrical, coupleable LED modules. However, the cooling device disclosed therein, as well as other prior known solutions (e.g. CN 105453933), require fluid channels arranged in the lighting units. These types of cooling arrangements having fluid couplings arranged on the lighting unit, i.e. fluid channels running through the lighting unit, are prone to some general drawbacks:
Increased costs due to waste of cooling pipe material during installation, in particular when fitting or cutting the length of the pipe to extend between adjacent lighting units.

Increased costs due to additional hardware costs for the lighting units, e.g. fluid tight couplings, electrically insulated fluid channels, etc.

Increased workload in terms of maintenance and installation, e.g. repairing leakages often require work intensive disassembling and sometimes a complete shut-off of the cooling system.

Reduced reliability due to an increased number of fluid couplings in the system which translates into an increased probability of leakage somewhere in the cooling system.

Another known solution is disclosed in WO 2008/010121 which teaches a cooling system arranged in a greenhouse having a pipe through which ambient air flows. The lighting units are fixed to the pipe, or even mounted inside the pipe; the latter arrangement makes it impossible to use liquid cooling mediums. Also, such solutions are often prone to drawbacks related to maintenance and replacement of malfunctioning lighting units which renders such solutions not suitable for vertical farming systems where the lighting units may be arranged in hard to reach places.

In other words, conventional systems often have work intensive installation procedures due to the cutting and fitting of cooling pipe lengths and/or tedious fluid couplings/ports, the same work intensity being present during maintenance of the lighting system (e.g. replacement of malfunctioning devices).

There is therefore a need for a new cooling arrangement for lighting units, particularly for plant cultivation systems, which is flexible, has lower maintenance requirements and is simple and therefore less work intensive during installation.

### SUMMARY OF THE INVENTION

It is therefore an object of the present invention to provide a cooled modular lighting arrangement and an illuminated cultivation storage system, which alleviates all or at least some of the above-discussed drawbacks of the presently known systems.

This object is achieved by means of a cooled modular lighting arrangement as defined in the appended claims.

According to an aspect of the present invention, there is provided a cooled modular lighting arrangement, comprising a channel system for carrying a cooling medium, said channel system including at least one tubular channel section, and at least one lighting unit requiring cooling. The lighting unit is attachable, detachable, and re-attachable from the tubular section, said lighting unit comprises an elongated groove formed to receive the tubular section when the lighting unit is attached to the tubular section, so that, when the lighting unit is attached to the tubular section, the tubular section provides cooling of the lighting unit without requiring any fluid connection of the lighting unit to the channel system.

Hereby, a flexible and cost effective cooled lighting arrangement with low maintenance requirements to be used in for example plant cultivation systems is presented. The lighting units are easily fitted onto the tubular channel section in order to cool the same, without any need for connecting each lighting unit to a fluid port whereby the workload and consequently the costs associated with the lighting arrangement are reduced.

The present invention is based on the realization that conventional cooling arrangements for lighting units, particularly in plant cultivation systems, are associated with work intensive operational steps. Thus, by providing a suitably shaped groove in each lighting unit, the lighting units and the tubular channel system can be easily attached (and re-attached) to each other, many of the problems associated with prior solutions are overcome. For example, if the channel system is a fixed channel system, e.g. constituting a part of a framework structure, the lighting units can easily be attached, detached and re-attached to the tubular channel sections. Thus, the lighting units can easily be removed and re-located to a more suitable location depending on a current situation without any need for specialized personnel for dealing with fluid couplings and connections. Alternatively, the lighting units may be "fixed" and the tubular channel sections (e.g. in the form of segments of a cooling hose) which can easily be attached, detached and re-attached to the lighting units, which also makes the cooling arrangement easier to install and maintain as compared to prior known systems.

Moreover, it was realized by the present inventor that by means of the inventive arrangement the lighting units can be more cost effective since the need for liquid tight chambers/channels and liquid tight couplings in the lighting units is drastically reduced. Further, the lighting units are preferably in the form of LED bars, i.e. elongated structures having a plurality of LEDs distributed along a length thereof. Compared to more conventional lighting devices which can be approximated as point light sources where the LEDs are arranged in a tight matrix, the illuminated light is distributed more evenly with LED bars. Moreover, configuration of light distribution my means of lenses and such is facilitated on LED bars.

However, another advantage of the LED bars is that the individual LEDs can be relatively sparsely distributed along the length of the profile they are attached to without sacrificing illumination performance as compared to the conventional "point light sources". This results in a relatively large contact surface between the tubular channel section and the lighting unit and consequently reduces the requirements for thermal coupling between the tubular channel section and the associated lighting unit.

In accordance with an embodiment of the present invention, each lighting unit includes at least one heat generating solid state light source in thermal contact with a heat sink, and wherein said elongated groove is formed in said heat sink. The heat sink preferably comprises a material with good thermal conductivity, such as e.g. aluminum, copper, or various alloys comprising any of the two compounds. Similarly, the tubular channel section(s) may be made of a rigid material suitable for thermal conduction, such as a metal (e.g. copper or aluminum or alloys thereof). However, the tubular channel section(s) may be made of other materials depending on the intended application as will be exemplified.

Further, the at least one heat generating solid state light source may be mounted to a bottom surface of the lighting unit and the elongated groove can accordingly be formed on a side surface of the lighting unit. This embodiment advantageously reduces the amount of height added to the arrangement when the lighting unit is attached to the tubular channel section or vice versa.

In accordance with yet another embodiment of the present invention, the tubular channel section and the elongated groove are formed so as to allow snap-on attachment of the lighting unit to the tubular channel section, or vice versa. In other words, the dimensions of the tubular channel section and the elongated groove are arranged such that the lighting unit may precisely fitted at least partially about the outer surface of the tubular channel section. For example, the elongated groove may be formed such that it encloses more than 50 % of the circumference of the tubular channel section when the lighting unit is attached thereto. Moreover, the lighting unit or the tubular channel section may be configured to have some resiliency, e.g. by material choices or appropriately arranged resilient members. For example, the elongated edges of the elongated groove may comprise resilient elements along the elongated groove, to allow the lighting unit to be snap-on fitted to the rigid tubular channel section. The resilient elements may comprise a resilient material (e.g. rubber) which yields upon attachment of the lighting unit to the tubular channel section and also ensures a high enough frictional coefficient to safely hold the lighting unit in position.

In order to facilitate snap-on fitting, the tubular channel section may be made of a flexible material, such as plastic or rubber. Such materials further have relatively good insulating properties, which will reduce the amount of water condensing on an outer surface of the tubular channel section. This is for example advantageous in humid environments in order to reduce the risk of damaging any circuitry in the lighting units and/or to reduce unwanted dripping onto nearby plants or crops.

Further, and in accordance with yet another embodiment of the present invention, the at least one lighting unit further comprises a fastening element arranged to secure the lighting unit to the tubular channel section, or vice versa. The fastening element may for example be clip or clamp connected to the lighting unit at a pivot point and configured to at least partly enclose the tubular channel section and thereby secure it to the lighting unit, or vice versa (i.e. secure the lighting unit to the tubular channel section).

Even further, in accordance with yet another embodiment of the present invention the tubular channel section(s) is/are detachably connected between two fluid connection points in the channel system. For example, the channel system may comprise a re-configurable network of tubular channel section extending across various parts of a plant cultivation system, such as e.g. an m³ cultivation system (also known as a vertical farming system). Thus, the cultivation system may comprise a set of more permanent or fixed cooling pipes or tubes with several fluid connection points whereby the tubular channel sections can be appropriately arranged to extend along desired sections of the cultivation system.

In accordance with another aspect of the present invention, there is provided an illuminated cultivation storage system, comprising a framework structure and a modular lighting arrangement according to the previous aspect of the present invention, where the channel system is integrated into the framework structure, so as to allow modular connection of one or several lighting units to the channel system, thereby ensuring cooling of the lighting units. Alternatively, the lighting units may be integrated into the framework structure, so as to allow modular connection of one or several tubular channel sections to the lighting unit(s).

Hereby, a cost effective and flexible m³-farming system is presented with lower maintenance and installation costs as compared to prior known solutions. By integrating the channel system into the framework structure, i.e. making it a part of the framework structure, the lighting arrangement can be made very flexible and simple to install and maintain, since the lighting units can easily be attached, detached and re-attached from the cooling channel system.

With this aspect of the invention, similar advantages and preferred features are present as in the previously discussed first aspect of the invention and vice versa.

Further, in accordance with an embodiment of the invention, the channel systems comprises channels formed in the structural elements of the framework structure, and the tubular channel section is connected to fluid connection points in the two structural elements between which it extends.

These and other features and advantages of the present invention will in the following be further clarified with reference to the embodiments described hereinafter.

### BRIEF DESCRIPTION OF THE DRAWINGS

For exemplifying purposes, the invention will be described in closer detail in the following with reference to embodiments thereof illustrated in the attached drawings, wherein:
Fig. 1 illustrates a perspective view of a cooled modular lighting arrangement in accordance with an embodiment of the present invention;
Figs. 2A - 2I illustrate perspective and cross-sectional views of cooled modular lighting arrangements in accordance with various embodiments of the present invention;
Fig. 3 illustrates perspective and cross-sectional views of cooled modular lighting arrangements in accordance with another embodiment of the present invention;
Fig. 4 illustrates perspective and cross-sectional views of cooled modular lighting arrangements in accordance with yet another embodiment of the present invention;
Fig. 5 illustrates a perspective view of an illuminated cultivation storage system having a cooled modular lighting arrangement as illustrated in Fig. 4;
Fig. 6 illustrates a perspective view of an illuminated cultivation storage system having a cooled modular lighting arrangement in accordance with another embodiment of the invention;
Fig. 7 illustrates a perspective view of an illuminated cultivation storage system having a cooled modular lighting arrangement in accordance with another embodiment the invention.

### DETAILED DESCRIPTION OF THE INVENTION

In the following detailed description, preferred embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention. In illustrations containing a large number of identical elements or devices, only a few of the devices/elements will be provided with a reference mark in order to reduce clogging of the figures.

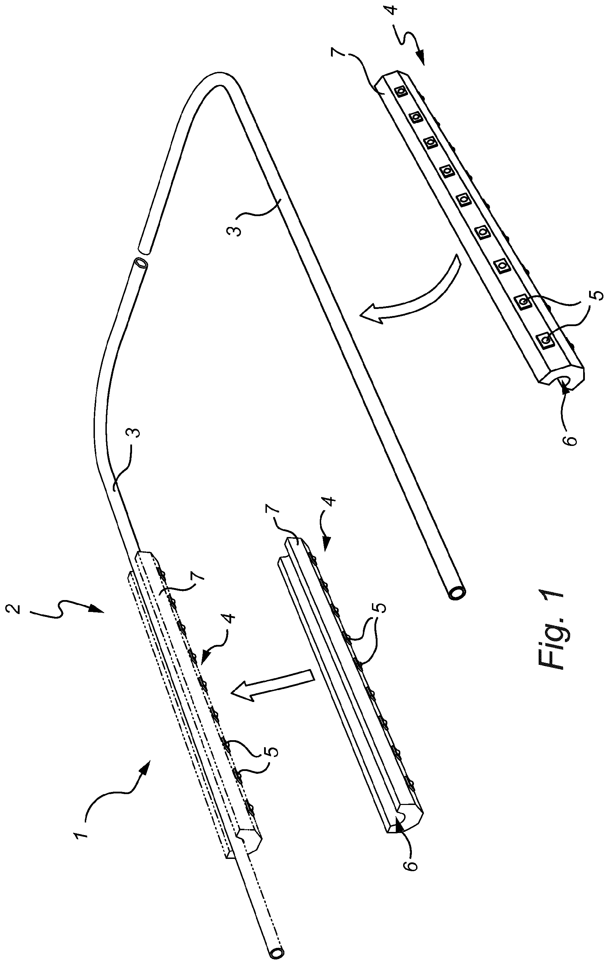

In Fig. 1 a perspective view of a cooled modular lighting arrangement 1, according to an embodiment of the present invention, is shown. The lighting arrangement 1 has a channel system 2 for carrying a cooling medium, which includes one or more tubular channel sections 3. The cooling medium (may also be known as coolant, heat transfer fluid or cutting fluid) may for example be water, various oils, glycol, air, inert gases, etc. The tubular channel section 3 can for example be a section of a cooling pipe, cooling hose or the like. Moreover, the tubular channel section is generally illustrated as having a circular cross-section (cylindrical body), albeit it may have other cross-sectional shapes, such as e.g. polygonal, without departing from the scope of the invention.

Further, the lighting arrangement 1 includes one or more lighting units 4 which require cooling. In more detail, the lighting units 4 have one or more heat generating elements 5 in need of cooling mounted thereto, the heat generating elements 5 are here in the form of solid state light sources 5 such as LEDs. Each lighting unit 4 is arranged with an elongated groove 6 formed to receive the tubular channel section 3 when the lighting unit 4 is attached to the tubular channel section 3. Thus, each lighting unit 4 is attachable, detachable and re-attachable to/from the tubular channel section 3. In particular, the elongated groove 6 is formed such to ensure a tight fit at least partly around the tubular channel section 3 (as illustrated by the lighting unit attached to the tubular channel section), in order to achieve a good thermal contact between the coolant flowing through the tubular channel section 3 and the lighting unit 4. Hereby, the lighting unit 4 is cooled without any need for fluid connection of the lighting unit 4 to the channel system 2.

The elongated groove 6 is here formed in a heat sink 7 of the lighting unit 7. The one or more solid state light sources (LEDs in the following) are arranged in thermal contact with the heat sink 7, in order to subsequently achieve a reduced thermal resistance between the LEDs and the coolant flowing through the tubular channel section 3 to which the lighting unit 4 is attached. The heat sink can for example be made of aluminum in order to keep the thermal resistance low as well as the overall weight of the modular lighting unit.

Moreover, the inventive lighting arrangement 1 is very flexible and it is easily be installed and reconfigured by an operator as there are no fluid ports to the lighting unit that need to be disconnected and re-connected every time a lighting unit 4 needs to be relocated or replaced. Moreover, conventional solutions many times require a complete shut-off of the whole cooling system when replacing or relocating a single lighting unit, a problem which is mitigated by the present invention. Furthermore, the unit cost for each lighting unit is reduced as there is no need for insulated fluid channels running through each lighting unit.

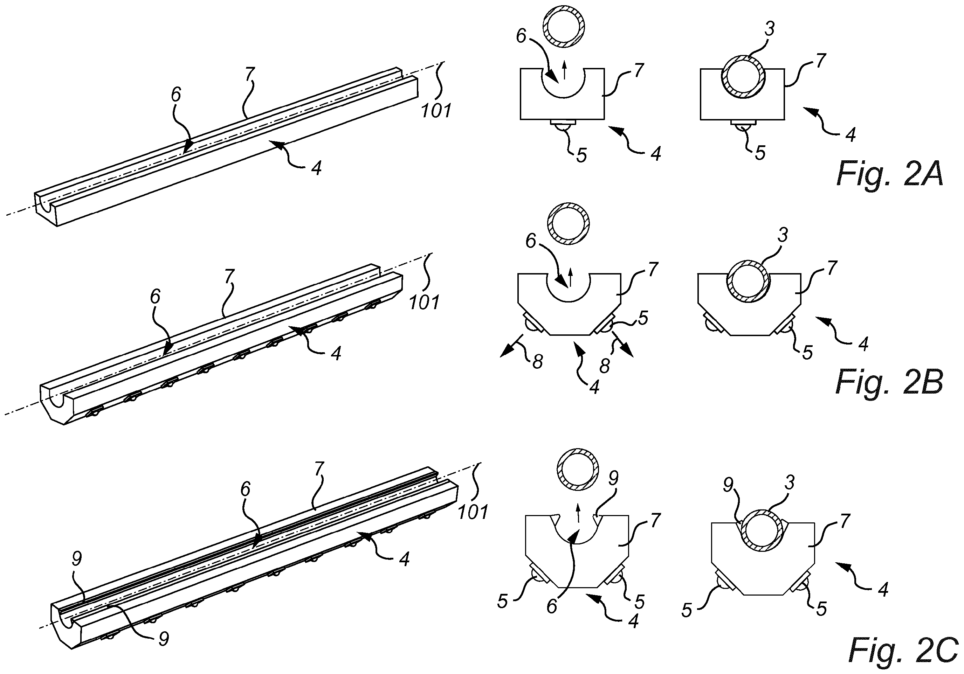

Fig. 2A illustrates a cross-sectional view of a lighting unit 4 and a tubular channel section 3 in accordance with an embodiment of the invention. The cross-section is taken along a plane perpendicular to the elongated axis 101 of the lighting unit 4. The lighting unit 4 comprises a single row of LEDs arranged on a bottom surface of the heat sink 7. The bottom surface is in the present case the surface opposite to the top surface comprising the elongated groove 6.

Fig. 2B illustrates an alternative embodiment where the lighting unit 4 comprises two rows of LEDs arranged on downward facing surfaces in order to enable dual light distribution as indicated by the arrows 8.

Further, Fig. 2C illustrates a perspective view of a lighting unit 4 together with two cross-sectional views, one showing the lighting unit 4 and the other showing the lighting unit 4 attached to a tubular channel section 3. The cross-section is taken along a plane perpendicular to the elongated axis 101. In the embodiment illustrated in Fig. 2C, the lighting unit 4 comprises resilient elements along the elongated groove 6, and more specifically along the edge of the elongated groove. The resilient elements are here in the form resilient flanges 9, made of e.g. rubber or some suitable polymer. The resilient flanges 9 allows the lighting unit 4 to be snap-on fitted to a tubular channel section 3, and aids in securing the lighting unit 4 to the tubular channel section 3. The tubular channel section 3 is preferably made of a rigid material suitable form thermal conduction such as a metal (e.g. copper).

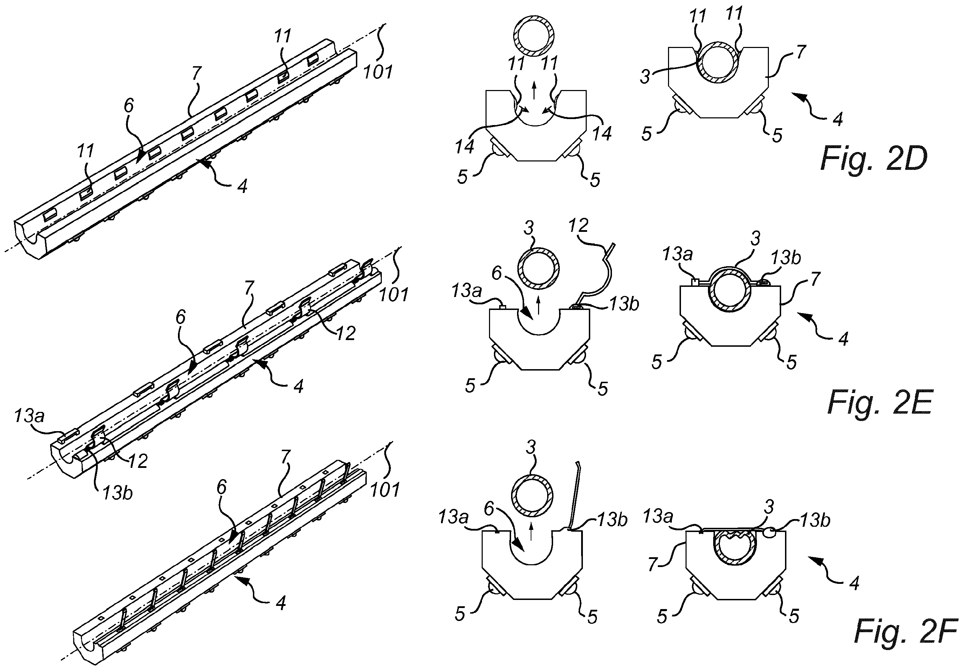

Fig. 2D illustrates a perspective view of a lighting unit 4 together with two cross-sectional views, one showing the lighting unit 4 and the other showing the lighting unit 4 attached to a tubular channel section 3. The cross-section is taken along a plane perpendicular to the elongated axis 101. In the embodiment illustrated in Fig. 2D, the lighting unit also comprises resilient elements along the elongated groove 6. The resilient member here being in the form of spring elements 11, arranged on a surface of the groove 6. The spring elements 11 may for example be leaf springs, coil springs or similar. The spring elements ensure a secure and tight attachment of the lighting unit 4 to the tubular channel section 3. The tubular channel section is also here preferably made of a rigid material, such as metal (e.g. copper). Moreover, the spring elements 11 may advantageously be placed such that a biasing force is directed towards the lower part of the groove 6 (as indicated by the arrows 14), consequently pressing the tubular channel section 3 against the heat sink 7 of the lighting unit 7 and thereby reducing thermal resistance between the coolant flowing through the tubular channel section 3 and the LEDs. In other words, the spring elements 11 are preferably placed proximal to the edges of the elongated groove 6 such that a biasing force (indicated by arrows 14) is directed towards the lower part of the groove 6.

Fig. 2E illustrates a perspective view of a lighting unit 4 together with two cross-sectional views, one showing the lighting unit 4 and the other showing the lighting unit 4 attached to a tubular channel section 3. The cross-section is taken along a plane perpendicular to the elongated axis 101. In Fig. 2E the lighting unit 4 comprises fastening elements 12 arranged to secure the lighting unit 4 to the tubular channel section 3. Each of the fastening elements includes an attachment portion (e.g. a hinging element) and a securing element 13a which may be any suitable type of securing element as known in the art (e.g. a magnetic or mechanical fastener). The lighting unit 4 can thereby easily be attached, detached and reattached to the tubular channel section 3.

Fig. 2F illustrates a perspective view of a lighting unit 4 together with two cross-sectional views, one showing the lighting unit 4 and the other showing the lighting unit 4 attached to a tubular channel section 3. The cross-section is taken along a plane perpendicular to the elongated axis 101. Similarly to the embodiment illustrated in Fig. 2E, the lighting unit 4 shown in Fig. 2F comprises a fastening element 12. However, in this embodiment the fastening element 12 is arranged to press the tubular channel section 3 into the elongated groove 6, such that the tubular channel section 3 is (elastically) deformed (as indicated in the right-most cross-sectional illustration). This ensures that the tubular channel section 3 is tightly pressed against the surface of the elongated groove 6 formed in the heat sink 7 in order to reduce the thermal resistance between the two, or in other words, to increase the thermal coupling between the two. The tubular channel section is in this embodiment (embodiment of Fig. 2F) made of a flexible material allowing elastic deformation, such as plastic or rubber. Alternatively, the tubular channel section may be compressed between a flat surface (such as a ceiling surface) onto which the lighting unit is fastened.

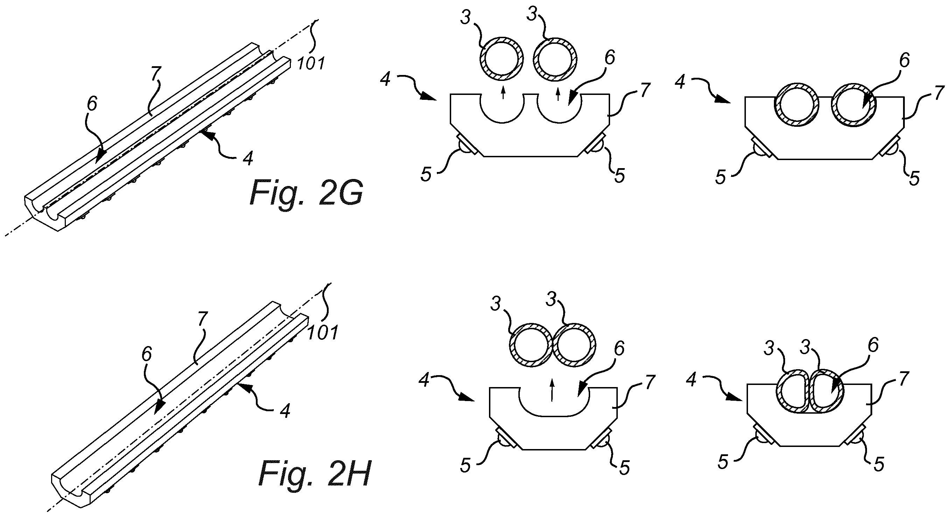

Fig. 2G illustrates a perspective view of a lighting unit 4 together with two cross-sectional views, one showing the lighting unit 4 and the other showing the lighting unit 4 attached to a tubular channel section 3. The cross-section is taken along a plane perpendicular to the elongated axis 101. In Fig. 2G the lighting unit 4 comprises two elongated grooves 6a, 6b which are formed to receive two tubular channel sections 3. The two elongated grooves 6a, 6b extend in parallel to each other. The tubular channel sections 3 may be configured such that one of the tubular channel sections 3 is part of a cooling fluid supply, and the other tubular channel section 3 is part of a cooling fluid return.

Fig. 2H illustrates a perspective view of a lighting unit 4 together with two cross-sectional views, one showing the lighting unit 4 and the other showing the lighting unit 4 attached to a tubular channel section 3. The cross-section is taken along a plane perpendicular to the elongated axis 101. In Fig. 2H the lighting unit comprises a single elongated groove 6 formed to receive two tubular channel sections 3. In this embodiment illustrated in Fig. 2H, the tubular channel sections 3 are made of a flexible material, such as plastic or rubber, whereby the tubular channel sections 3 can be (elastically) deformed when the lighting unit 4 is attached to the tubular channel sections. The tubular channel sections 3 will then be pressing against the surface of the elongated groove 6, reducing the thermal resistance between the tubular channel section 3 and the heat sink 7 of the lighting unit. Consequently the cooling of the LEDs 5 by the coolant flowing through the tubular channel section 3 is improved. The tubular channel sections 3 may be configured such that one of the tubular channel sections 3 is part of a cooling fluid supply, and the other tubular channel section 3 is part of a cooling fluid return.

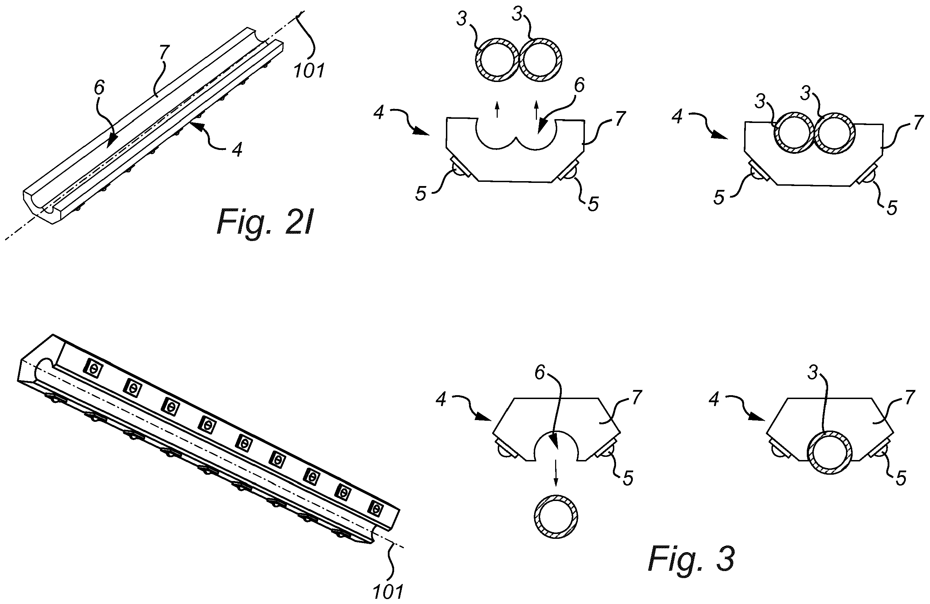

Fig. 2I illustrates a perspective view of a lighting unit 4 together with two cross-sectional views, one showing the lighting unit 4 and the other showing the lighting unit 4 attached to a tubular channel section 3. The cross-section is taken along a plane perpendicular to the elongated axis 101. Similarly to Fig. 2H, the lighting unit 4 illustrated in Fig. 2I comprises a single elongated groove 6 formed to receive two tubular channel sections 3 upon attachment of the lighting unit 4 to the tubular channel section 3. In this embodiment (Fig. 2H) the elongated groove 6 comprises two sections, each being arranged to accommodate one of the tubular channel sections 3. The tubular channel sections 3 are here made of a rigid material, such as e.g. metal. Moreover, the tubular channel sections 3 may be configured such that one of the tubular channel sections is part of a cooling fluid supply, and the other tubular channel section is part of a cooling fluid return.

Fig. 3 illustrates a perspective view of a lighting unit 4 together with two cross-sectional views, one showing the lighting unit 4 and the other showing the lighting unit 4 attached to a tubular channel section 3. The cross-section is taken along a plane perpendicular to the elongated axis 101. In this embodiment (Fig. 3) the lighting has an elongated groove 6 formed on a bottom surface of the heat sink 7 of the lighting unit, such that the lighting unit 4 is attached to the tubular channel section 3 from a top side. By arranging the elongated groove 6 on a bottom surface of the heat sink 7, the risk of the lighting unit 7 falling off from the tubular channel section 3 is reduced and the arrangement is therefore more secure.

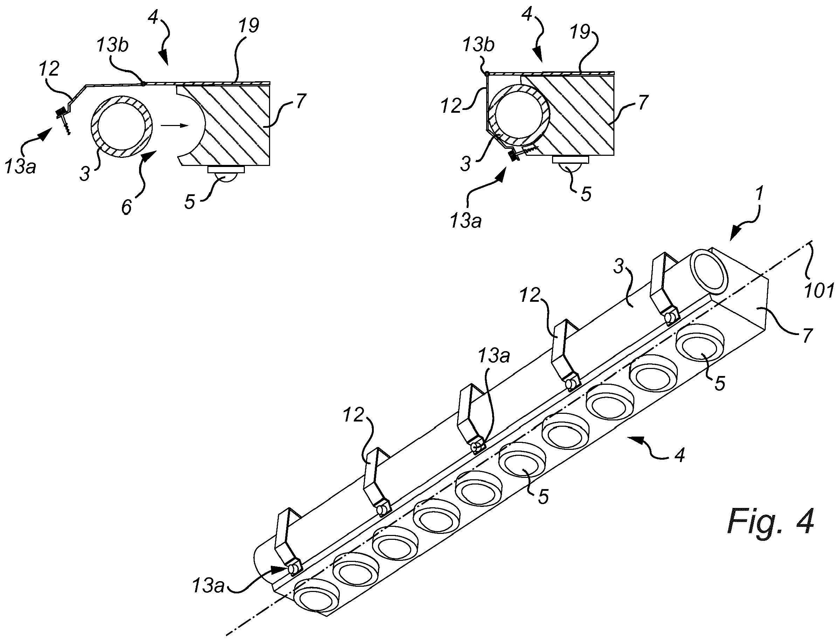

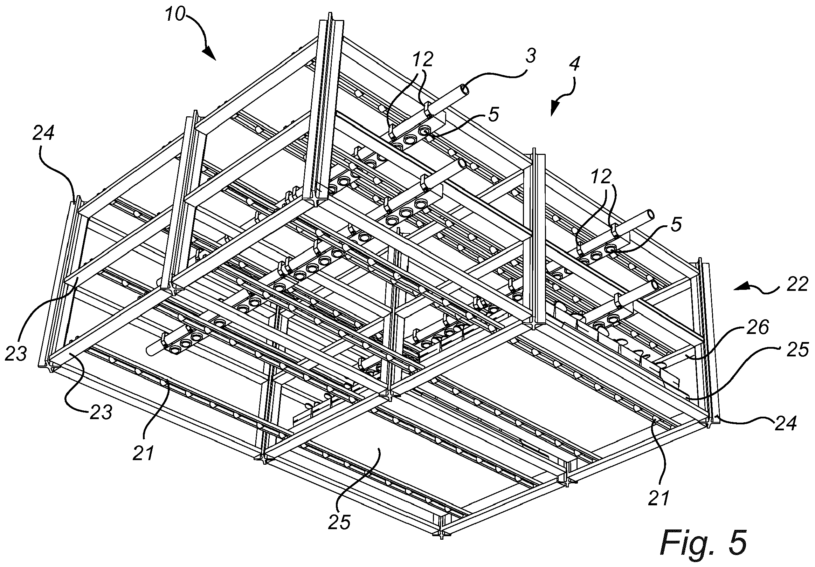

Fig. 4 illustrates a perspective view of a lighting unit 4 together with two cross-sectional views, one showing the lighting unit 4 and the other showing the lighting unit 4 attached to a tubular channel section 3, in accordance with another embodiment of the present invention. The cross-section is taken along a plane perpendicular to the elongated axis 101. The lighting unit 4 is attached to a support member 19, which either may be a separate component or a structural element of a greenhouse/storehouse cultivation storage system, which will be further illustrated in reference to Fig. 5. The support member 19 is coupled to a fastening element 12 via a hinge (or pivot) 13b, while a distal portion of the fastening element 12 (as opposed to the proximal portion closest to the hinge 13b) includes a securing element 13a, here in the form of a screw, arranged to be fastened to the lighting unit 4 in order to secure the tubular channel section 3 to the lighting unit 4, or vice versa, i.e. it may be so that the lighting unit 4 is secured to the tubular channel section 3 in some embodiments of the present invention. The fastening element 12 is preferably arranged to also press the tubular channel section 3 against the surface of the groove 6 of the lighting unit 4 in order to improve the thermal coupling between the two. The securing element 13a may also be a magnetic element or any other suitable mechanical coupling, such as e.g. a hook-and-loop or the like.

Further, the elongated groove 6 is arranged on a side surface of the lighting unit 4. The term side surface being in reference to the horizontally facing surfaces in case of a rectangular cross-section, i.e. the downward facing surface being the surface onto which the light sources 5 are mounted. By forming the elongated groove 6 on the side surface instead of the top or bottom surface as illustrated in Figs. 2A - I and Fig. 3, the cooled modular lighting arrangement can be easily fit into confined spaces. In more detail, in many greenhouse environments it is desirable to not add additional height to the lighting arrangement 1, particularly, in storehouse cultivation storage system where everything is to be optimized in terms of space utilization. For example, the lighting unit 4 must be positioned sufficiently far enough above the planted surface(s) in order to ensure good light distribution. Therefore, by configuring the cooled modular lighting arrangement 1 such that the lighting unit(s) 4 and the tubular channel section(s) 3 engage each other in a horizontal direction, i.e. adding width rather than height to the lighting arrangement 1, the lighting units 4 can be cooled without adding height to the overall lighting arrangement 1.

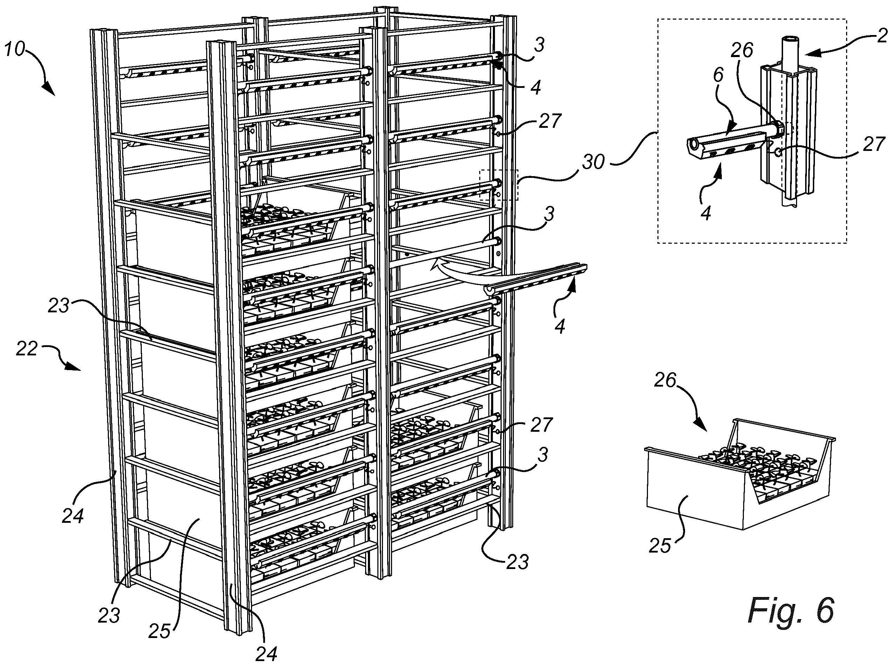

Fig. 5 illustrates a perspective view from underneath an illuminated cultivation storage system 10, or at least a section thereof, in accordance with an embodiment of the present invention. The illuminated cultivation storage system 10 falls under the category of vertical farming or m³ farming. The illuminated cultivation storage system 10 has a framework structure 22 having a three-dimensional framework of horizontal structural elements 23 and vertical structural elements 24. Further, the framework structure 22 forms a grid of horizontal storage tunnels in which storage containers 25 holding growing crops 26 may arranged in a train formation, and moved within the framework structure 22 by means of the rolling conveyers 21. The cultivation storage system 1 may also be arranged so to form vertical storage tunnels where the storage containers 25 are arranged in a stacked formation (as illustrated in Fig. 6). However, for the sake of brevity, details regarding various aspects of the illuminated cultivation storage system not directly related to the cooling of the lighting units 4 can e.g. be found in the currently un-published and pending European Patent Application No. EP 16178861.7, by the Applicant, Heliospectra AB, of Gothenburg Sweden, incorporated herein by reference, and will therefore not be further discussed in this application.

The lighting units 4 are fastened or mounted to the framework structure 22, and more specifically to the horizontal structural elements 23, whereby the tubular channel section may be provided and arranged within the elongated grooves formed in the lighting units 4. Alternatively, the tubular channel sections 3 may be mounted to the structural elements of the framework structure 22 and the lighting units 4 may accordingly be attached to the tubular channel sections 3. The tubular channel sections 3 and the lighting units 4 engage each other in a horizontal direction whereby the cooled modular lighting arrangement doesn't result in any additional height as compared to conventional solutions where the lighting units have fluid channels extending therethrough.

Fig. 6 illustrates a perspective view of an illuminated cultivation storage system 10 according to an embodiment of the present invention. The illuminated cultivation storage system falls under the category of vertical farming or m³ farming. The illuminated cultivation storage system 10 has a framework structure 22 having a three-dimensional framework of horizontal structural elements 23 and vertical structural elements 24. Further, the framework structure 22 forms a grid of vertical storage tunnels in which storage containers 25 holding growing crops 26 may be stacked on top of each other along a vertical axis 501 of the storage system.

Further, in Fig. 6 the illuminated cultivation storage system 10 includes a modular lighting arrangement where the channel system is integrated into the framework structure, thereby allowing modular connection of one or several lighting units 4 to the channel system thereby ensuring cooling of the lighting units 4. More specifically, channel system 2 comprises channels formed in the structural elements, and the tubular channel sections 3 are connected to fluid connection points 28 in the two structural elements between which they extend, as shown in the magnified cut-out 25. The tubular channel sections 3 can therefore be fixed to the framework structure 22, thereby providing stability to the whole framework. Alternatively, as illustrated in Fig. 4 the tubular channel sections 3 may be arranged to extend transversely through the vertical structural elements 4, making them simple to remove and replace in case of leakage. Also, the tubular channel sections could be used instead of some of the horizontal structural elements 23 of the framework structure to provide rigidity and support the structure. However, as another alternative the tubular channel 3 sections may be arranged to extend between horizontal structural elements 23.

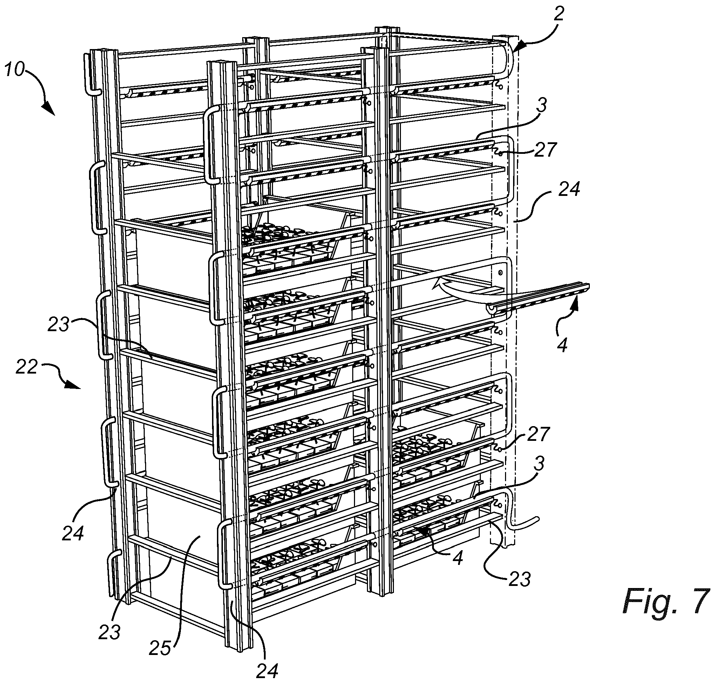

Furthermore, Figs. 6 - 7 also schematically indicate an electrical connection 27 for powering the lighting units, here in the form of an electrical contact and a cable or wire. Alternatively the electrical connection 27 may be provided without cables or wire, and the lighting units 4 may include an electrical contact which is configured to mate with a corresponding electrical contact arranged on the framework structure upon attachment to the tubular channel section. For example, the lighting unit may be snap-fitted to the channel section, and then slid sideways to bring an electrical connector of the lighting unit into electrical contact with a corresponding connector on the framework.

Even though the invention has been described with reference to specific exemplifying embodiments thereof, many different alterations, modifications and the like will become apparent for those skilled in the art. For example, the cooled modular lighting arrangement has generally been described in reference to an m³ farming system; however, the skilled artisan realizes that the lighting arrangement of the invention and its advantageous effects are readily applicable to more conventional surface farming greenhouses. Variations to the disclosed embodiments can be understood and effected by the skilled addressee in practicing the claimed invention, from a study of the drawings, the disclosure, and the appended claims. Furthermore, in the claims, the word "comprising" does not exclude other elements or steps, and the indefinite article "a" or "an" does not exclude a plurality.

## Claims

1. A cooled modular lighting arrangement, comprising:
a channel system for carrying a cooling medium, said channel system including at least one tubular channel section, and
at least one lighting unit requiring cooling which is attachable, detachable, and re-attachable from the tubular section, said lighting unit comprising an elongated groove formed to receive said tubular section when the lighting unit is attached to the tubular section,
so that, when the lighting unit is attached to the tubular section, the tubular section provides cooling of the lighting unit without requiring any fluid connection of the lighting unit to the channel system.

2. The modular lighting arrangement according to claim 1, wherein each lighting unit includes at least one heat generating solid state light source in thermal contact with a heat sink, and wherein said elongated groove is formed in said heat sink.

3. The modular lighting arrangement according to claim 2, wherein said at least one heat sink comprises aluminum.

4. The modular lighting arrangement according to one of the preceding claims wherein the tubular channel section and the elongated groove are formed so as to allow snap-on attachment of the lighting unit.

5. The modular lighting arrangement according to one of the preceding claims, wherein the tubular channel section is made of a flexible material, such as plastic or rubber.

6. The modular lighting arrangement according to one of claims 1 - 4, wherein the tubular channel section is made of a rigid material suitable for thermal conduction, such as a metal.

7. The modular lighting arrangement according to claim 6, wherein the lighting unit comprises resilient elements along the elongated groove, to allow the lighting unit to be snap-on fitted to the rigid channel section.

8. The modular lighting arrangement according to one of the preceding claims, wherein the tubular channel section is detachably connected between two fluid connection points in the channel system.

9. The modular lighting arrangement according to one of the preceding claims, wherein more than one lighting unit is attachable to one single tubular channel section.

10. The modular lighting arrangement according to one of the preceding claims, wherein said channel system includes at least two parallel tubular channel sections and wherein said elongated groove is configured to receive said at least two parallel tubular channel sections when the lighting unit is attached to the at least two parallel tubular sections.

11. The modular lighting arrangement according to one of claims 1 - 9, wherein said channel system includes at least two parallel tubular channel sections and wherein said at least one lighting unit comprises at least two parallel elongated grooves, each elongated groove being arranged to receive one single tubular channel section when the lighting unit is attached to the at least two parallel tubular channel sections.

12. The modular lighting arrangement according one of the preceding claims, wherein said at least one lighting unit further comprises a fastening element arranged to secure said lighting unit to said tubular channel section.

13. An illuminated cultivation storage system, comprising a framework structure and a modular lighting arrangement according to one of the preceding claims, wherein said channel system is integrated into the framework structure, so as to allow modular connection of one or several lighting units to the channel system, thereby ensuring cooling of the lighting units.

14. The illuminated cultivation storage system according to claim 13, wherein the tubular channel section extends between two structural elements of the framework structure.

15. The illuminated cultivation storage system according to claim 14, wherein the channel system comprises channels formed in the structural elements of the framework structure, and the tubular channel section is connected to fluid connection points in the two structural elements between which it extends.

16. The illuminated cultivation storage system according to one of claims 13 - 15, wherein said at least one tubular channel section is fixed to the framework structure.

17. An illuminated cultivation storage system, comprising a framework structure and a modular lighting arrangement according to one of claims 1 - 12, wherein said lighting units are integrated into the framework structure, so as to allow modular connection of one or several tubular channel sections to the lighting units, thereby ensuring cooling of the lighting units.
